# FASCICULE DE BREVET EUROPEEN

(11) **EP 0 547 951 B1**
(45) Date de publication et mention de la délivrance du brevet: **24.05.1995**
(21) Numéro de dépôt: 92403380.6
(22) Date de dépôt: 11.12.1992
(51) Int. Cl.: B01D 35/01, F02M 37/22

(54) **Filtre à gazole**
Dieselöl-Filter
Gasoil filter

(30) Priorité: 16.12.1991 FR 9115594
(43) Date de publication de la demande: 23.06.1993
(73) Titulaire: FILTRAUTO, F-78180 Montigny le Bretonneux (FR)
(72) Inventeur: Pages, Jean, F-93800 Epinay sur Seine (FR); Clarysse, Didier, F-78180 Montigny le Bretonneux (FR)
(74) Mandataire: Burbaud, Eric

(56) Documents cités:
- EP-A- 0 300 910
- EP-A- 0 342 308
- EP-A- 0 376 443
- EP-A- 0 438 283
- EP-A- 0 439 901
- DE-A- 2 843 156
- US-A- 2 983 384
- US-A- 3 771 290

## Description

L'invention concerne les filtres à gazole comprenant un réceptacle avec une entrée pour le gazole et une sortie supérieure pour le gazole, et un élément filtrant contenu dans le réceptacle, s'étendant vers le bas à partir de la sortie et monté de façon telle que le seul circuit possible pour le gazole de l'entrée à la sortie passe à travers l'élément filtrant.

Il existe des filtres à gazole du genre précité, servant, dans un circuit d'alimentation en gazole pour moteur diesel, à filtrer le gazole pour le débarrasser de ses impuretés, de l'air en suspension et de l'eau en suspension.

Comme il est nécessaire pour la décantation de l'eau retenue de monter le filtre verticalement, l'air arrêté par le médium filtrant se positionne en un point haut du filtre, c'est-à-dire à un niveau proche de celui de l'entrée du filtre.

Lorsque l'air arrêté par le filtre représente un certain volume, il peut nuire au fonctionnement du filtre, et, par voie de conséquence, être à l'origine d'une mauvaise alimentation de la pompe à injection.

Par ailleurs, si l'air arrêté par le filtre finit par traverser ce dernier sous l'effet de la pression, cette traversée se fait sous forme de bulles d'air relativement grandes, et le bon fonctionnement de la pompe à injection n'est plus assuré.

Pour éliminer l'air en question, on procède en général à un dégazage permanent en ayant recours à un bloc de dégazage placé en un point haut du filtre.

Ce bloc comprend:
- un corps microporeux à porosité ouverte présentant la caractéristique d'être plus facilement traversé par l'air que par le gazole alors que c'est l'inverse pour le médium filtrant du filtre, généralement constitué en papier filtre, corps dont la face amont est mise en contact avec une portion, de la chambre d'entrée du filtre, où s'accumule l'air à dégazer,
- une poche à air délimitée en partie par la face aval du corps microporeux,
- et des moyens pour vider cette poche à la sortie du filtre sous la forme de très petites bulles d'air, moyens composés d'un passage calibré reliant ladite poche à ladite sortie et d'un col traversé par le gazole sortant du filtre, col propre à créer par effet venturi une aspiration à la sortie dudit passage.
   Les filtres connus tels que définis ci-dessus présentent un certain nombre d'inconvénients et en particulier celui d'un prix élevé pour les raisons suivantes :
- le corps microporeux qui, en général, est en bronze fritté, est relativement coûteux,
- le coût de fabrication du passage calibré ultra fin est relativement élevé.

Par ailleurs, le document EP-O 300 910 divulgue un filtre à carburant comprenant un réceptacle avec une entrée pour le carburant et une sortie supérieure pour le carburant, un élément filtrant contenu dans le réceptacle, s'étendant vers le bas à partir de la sortie, et monté de façon telle que le seul circuit possible pour le carburant de l'entrée à la sortie passe à travers l'élément filtrant, et une cloison étanche disposée dans le réceptacle du côté aval de l'élément filtrant, s'étendant vers le bas dans le réceptacle à partir de la sortie de ce réceptacle de façon à former avec l'élément filtrant une chambre à air, un passage étant ménagé à la partie inférieure de la cloison étanche pour le carburant ayant traversé l'élément filtrant.

Ce filtre présente notamment les inconvénients de comporter un mécanisme d'évacuation d'air délicat situé en amont de l'élément filtrant, et d'entraîner des fuites de carburant du filtre vers le réservoir.

Le but de l'invention est de remédier aux inconvénients précités.

A cet effet, le filtre à gazole du genre ci-dessus défini est essentiellement caractérisé , selon l'invention, en ce que la cloison étanche est percée dans sa partie supérieure d'un ou de deux petit(s) trou(s) faisant communiquer la chambre à air avec la sortie supérieure.

Dans des modes de réalisation avantageux, on a recours en outre à l'une et/ou à l'autre des dispositions suivantes :
- la cloison étanche forme, avec l'élément filtrant et son support, une cartouche amovible,
- la cloison étanche est reliée de façon étanche à l'extrémité inférieure de l'élément filtrant et elle est percée dans sa partie inférieure d'un orifice d'une section telle que la dépression créée dans le courant de gazole ayant traversé cet orifice ait pour effet d'activer la sortie de bulles d'air au niveau du petit trou,
- la cloison étanche s'étend presque jusqu'à l'extrémité inférieure de l'élément filtrant et crée ainsi une ouverture inférieure de hauteur telle que la dépression créée dans le courant de gazole ayant traversé cette ouverture ait pour effet d'activer la sortie de bulles d'air au niveau du petit trou,
- l'élément filtrant et la cloison étanche ont chacun une forme cylindrique de révolution et la cloison étanche est disposée coaxialement à l'intérieur de l'élément filtrant.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention, en se référant aux dessins ci-annexés d'une manière bien entendu non limitative.

La figure 1 de ce dessin montre une coupe schématisée d'un filtre à gazole selon l'invention.

La figure 2 montre, également en coupe schématique, une variante de filtre à gazole, également conforme à l'invention.

Selon chaque mode de réalisation représenté, le filtre à gazole comprend un réceptacle 1 en une seule pièce, obtenu par emboutissage, avec une paroi latérale 2 et un fond 3. Un bord supérieur 4 de la paroi 2 est formé de manière telle que le réceptacle 1 puisse être monté en position verticale au-dessous d'une pièce de raccordement supérieure 5.

La pièce de raccordement supérieure 5, qui est en général solidaire du bloc moteur (non représenté), comprend une entrée de gazole 6 et une sortie de gazole 7 ainsi qu'une portion intermédiaire 8, appelée par la suite pontet, disposée entre lesdites entrée 6 et sortie 7.

Le réceptacle 1 est garni d'une cartouche filtrante amovible 9.

Cette cartouche est montée dans le réceptacle 1 de façon telle que, lorsque ce réceptacle est monté au-dessous de la pièce de raccordement supérieure 5, par exemple par vissage, l'entrée de gazole 6 et la sortie de gazole 7 sont séparées efficacement, le gazole à filtrer passant obligatoirement et entièrement à travers un élément filtrant 10 compris par la cartouche 9.

Cet élément filtrant 10 est constitué par un corps cylindrique en papier filtre judicieusement plissé de manière connue en soi, et la cartouche 9 est complétée par un support 11.

Le support 11 est constitué par un manchon métallique intérieur perforé 14, par une coupelle pleine inférieure 15 et par une coupelle supérieure 16 évidée en son centre. Il maintient le papier filtre 10 dans sa forme cylindrique.

L'étanchéité entre l'entrée 6 et la sortie 7 de gazole est réalisée par écrasement axial d'un joint annulaire 13 interposé entre la coupelle supérieure 16 et la pièce de raccordement 5, cet écrasement étant assuré par détente d'un ressort hélicoïdal 12 interposé axialement entre le fond 3 du réceptacle et la coupelle inférieure 15.

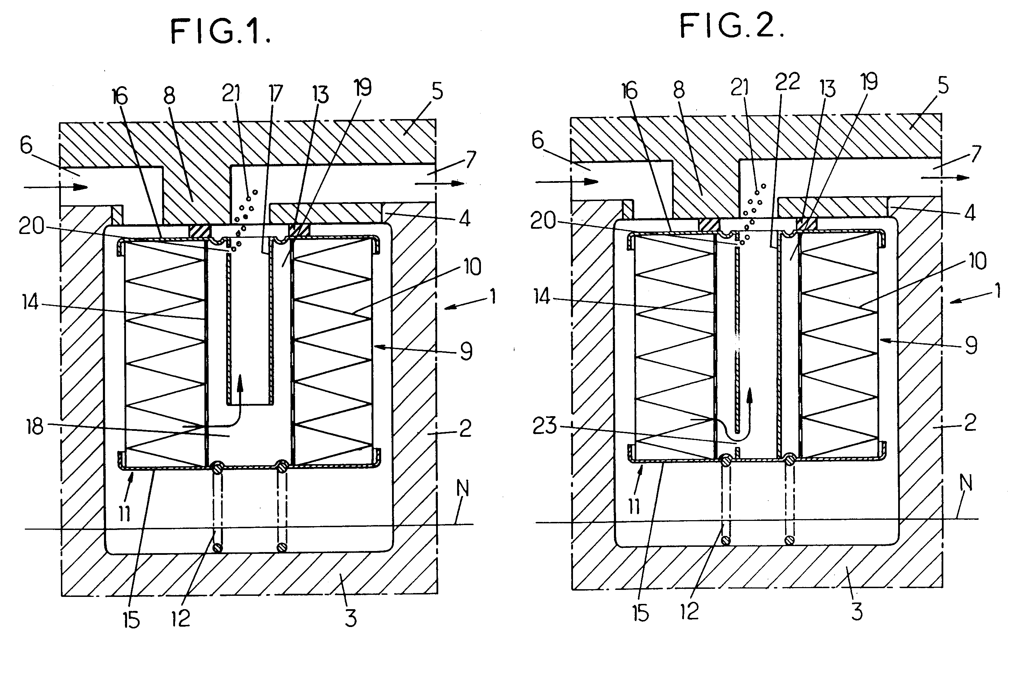

Dans un premier mode de réalisation, montré en figure 1, une cloison étanche tubulaire 17 est disposée coaxialement à l'intérieur du manchon 14. La cloison étanche 17 s'étend à partir de la coupelle supérieure 16 vers le bas de l'élément filtrant 10 et jusqu'à une certaine distance de la coupelle inférieure 15, créant ainsi une ouverture 18 par laquelle le gazole passe, après filtration, vers la sortie 7 du filtre.

La cloison étanche 17, qui peut être fabriquée en une seule pièce avec la coupelle supérieure 16, par exemple par emboutissage, forme avec le manchon 14 une chambre à air 19.

Dans cette chambre à air, l'air ayant traversé de façon discontinue le papier filtre 10, est accumulé provisoirement.

Pour pouvoir dégager cet air accumulé de la chambre à air 19, la cloison 17 est percée dans sa partie supérieure, de préférence à proximité de la coupelle supérieure 16, d'un petit trou 20. La section de ce petit trou 20 est choisie si petite que l'air stocké dans la chambre à air 19 n'en peut sortir que sous forme de très petites bulles 21. Comme ces bulles d'air sont très petites, l'air peut être remélangé avec le gazole sans nuire au bon fonctionnement de la pompe à injection à approvisionner avec le gazole filtré.

Selon une variante avantageuse (non représentée) du premier mode de réalisation, la cloison étanche 17 s'étend presque jusqu'à la coupelle inférieure 15. L'ouverture 18 a ainsi une hauteur telle qu'une dépression est créée dans le courant de gazole qui la traverse. Cette dépression a pour effet d'activer la sortie de bulles d'air par le petit trou 20.

Le deuxième mode de réalisation de l'invention, montré en figure 2, diffère du premier uniquement en ce que la cloison étanche tubulaire, désignée ici par la référence 22, a sa base reliée de façon étanche à la coupelle inférieure 15, l'ouverture circonférentielle précédente 18 étant ici remplacée par un orifice 23 dont la section est choisie de façon à créer la dépression désirée à la sortie du petit trou 20.

Selon une variante applicable à l'un quelconque des deux modes de réalisation décrits ci-dessus, un deuxième petit trou (non représenté), analogue au petit trou 20, peut être prévu. La présence d'un tel deuxième petit trou exige que l'on augmente la dépression créée sur le courant de gazole ayant traversé l'orifice 18 ou 23, pour pouvoir assurer une sortie efficace de l'air à travers les deux trous 20 sous forme de petites bulles.

Le principe de la présente invention est, bien entendu, également applicable à des filtres à gazole dont l'élément filtrant 10 n'a pas une forme annulaire, mais où il présente, par exemple, la forme d'un parallélépipède avec une face d'entrée et une face de sortie du gazole, essentiellement planes et parallèles l'une à l'autre. Dans ce cas-là, la cloison étanche est, bien entendu, également essentiellement plane et disposée parallèlement à la face de sortie de l'élément filtrant 10.

Comme le filtre à gazole selon l'invention sert aussi à débarrasser le gazole de l'eau en suspension, une certaine quantité d'eau s'accumule au fond du réceptacle. Pour purger le filtre de l'eau accumulée, un dispositif d'évacuation (non représenté) peut être prévu en un point bas du filtre. Sur les figures 1 et 2, on a indiqué en N le niveau de l'eau accumulée.

## Revendications

1. Filtre à gazole comprenant un réceptacle (1) avec une entrée (6) pour le gazole et une sortie supérieure (7) pour le gazole, un élément filtrant (10) contenu dans le réceptacle (1), s'étendant vers le bas à partir de la sortie (7), et monté de façon telle que le seul circuit possible pour le gazole de l'entrée (6) à la sortie (7) passe à travers l'élément filtrant (10), et une cloison étanche (17 ; 22) disposée dans le réceptacle (1) du côté aval de l'élément filtrant (10), s'étendant vers le bas dans le réceptacle (1) à partir de la sortie (7) de ce réceptacle de façon à former avec l'élément filtrant (10) une chambre à air (19), un passage (18 ; 23) étant ménagé à la partie inférieure de la cloison étanche (17 ; 22) pour le gazole ayant traversé l'élément filtrant, caractérisé en ce que ladite cloison étanche (17 ; 22) est percée dans sa partie supérieure d'un ou de deux petit(s) trou(s) (20) faisant communiquer la chambre à air (19) avec la sortie supérieure (7).

2. Filtre selon la revendication 1, caractérisé en ce que la cloison étanche (17 ; 22) forme, avec l'élément filtrant (10) et son support (11), une cartouche amovible (9).

3. Filtre selon l'une quelconque des revendications 1 et 2, caractérisé en ce que la cloison étanche (22) est reliée, de façon étanche, à l'extrémité inférieure (15) de l'élément filtrant (10) et en ce qu'elle est percée dans sa partie inférieure par un orifice (23) d'une section telle que la dépression créée dans le courant de gazole ayant traversé cet orifice ait pour effet d'activer la sortie de bulles d'air au niveau du petit trou (20).

4. Filtre selon l'une quelconque des revendications 1 et 2, caractérisé en ce que la cloison étanche (17) s'étend presque jusqu'à l'extrémité inférieure (15) de l'élément filtrant (10), créant ainsi une ouverture (18) inférieure d'une hauteur telle que la dépression créée dans le courant de gazole ayant traversé cette ouveture ait pour effet d'activer la sortie de bulles d'air au niveau du petit trou (20).

5. Filtre selon l'une quelconque des revendications 1 à 4, caractérisé en ce que l'élément filtrant (10) et la cloison étanche (17 ; 22) ont chacun une forme cylindrique de révolution et en ce que la cloison étanche (17 ; 22) est disposée coaxialement à l'intérieur de l'élément filtrant (10).

## Claims

1. Diesel fuel filter comprising a receptacle (1) with an inlet (6) for the diesel fuel and a top outlet (7) for the diesel fuel, and a filter element (10) contained in the receptacle (1), extending downwards from the outlet (7), and mounted so that the only circuit possible for the diesel fuel from the inlet (6) to the outlet (7) passes through the filter element (10), and a fluidtight partition (17 ; 22) disposed in the receptacle (1) on the downstream side of the filter element (10), extending downwards into the receptacle (1) from the outlet (7) of this receptacle so as to form, with the filter element (10), an air chamber (19), a passage (18 ; 23) being provided at the bottom part of the fluidtight partition (17 ; 22) for the fuel oil which has passed through the filtering element, characterized in that the said partition (17 ; 22) has, in its top part, one or two small hole(s) (20) which connect the air chamber (19) to the top outlet (7).

2. Filter according to Claim 1, characterised in that the fluidtight partition (17; 22) forms, with the filter element (10) and its support (11), a removable cartridge (9).

3. Filter according to either one of Claims 1 and 2, characterised in that the fluidtight partition (22) is connected, in a fluidtight manner, to the bottom end (15) of the filter element (10), and in that it has in its bottom part an orifice (23) with a cross section such that the pressure drop created in the flow of diesel fuel which has passed through this orifice has the effect of causing air bubbles to be discharged at the small hole (20).

4. Filter according to either one of Claims 1 and 2, characterised in that the fluidtight partition (17) extends almost as far as the bottom end (15) of the filter element (10), thus creating a bottom opening (18) of a height such that the pressure drop created in the flow of diesel fuel which has passed through this opening has the effect of causing air bubbles to be discharged at the small hole (20).

5. Filter according to any one of Claims 1 to 4, characterised in that the filter element (10) and the fluidtight partition (17; 22) each have a cylindrical shape and in that the fluidtight partition (17; 22) is disposed coaxially inside the filter element (10).

## Patentansprüche

1. Gasölfilter, umfassend einen Behälter (1) mit einem Eingang (6) für das Gasöl und einem oberen Ausgang (7) für das Gasöl, ein in dem Behälter (1) enthaltenes filterndes Element (10), welches sich von dem Ausgang (7) nach unten erstreckt und derart angebracht ist, daß der einzig mögliche Durchlaufweg für das Gasöl Von dem Eingang (6) zu dem Ausgang (7) durch das filternde Element (10) hindurchgeht, und eine dichte Zwischenwandung (17; 22), welche an der stromabwärtigen Seite des filternden Elements (10) angeordnet ist und sich von dem Ausgang (7) des Behälters in dem Behälter (1) nach unten erstreckt, derart, daß sie mit dem filternden Element (10) eine Luftkammer (19) bildet, wobei im unteren Bereich der dichten Zwischenwandung (17; 22) ein Durchlaß (18; 23) für das durch das filternde Element hindurchgegangene Gasöl ausgebildet ist, dadurch gekennzeichnet, daß die dichte Zwischenwandung (17; 22) in ihrem oberen Bereich von einem kleinen Loch (20) oder von zwei kleinen Löchern (20) durchsetzt ist, welches bzw. welche eine Verbindung der Luftkammer (19) mit dem oberen Ausgang (7) herstellt bzw. herstellen.

2. Filter nach Anspruch 1, dadurch gekennzeichnet, daß die dichte Zwischenwandung (17; 22) mit dem filternden Element (10) und dessen Träger (11) eine entnehmbare Patrone (9) bildet.

3. Filter nach einem der Ansprüche 1 und 2, dadurch gekennzeichnet, daß die dichte Zwischenwandung (22) dichtend mit dem unteren Ende (15) des filternden Elements (10) verbunden ist und daß sie in ihrem unteren Bereich von einer Öffnung (23) mit einem derartigen Querschnitt durchsetzt ist, daß der in der Strömung des durch diese Öffnung hindurchgegangenen Gasöls erzeugte Unterdruck die Wirkung hat, das Austreten von Luftblasen auf Höhe des kleinen Lochs (20) zu aktivieren.

4. Filter nach einen der Ansprüche 1 und 2, dadurch gekennzeichnet, daß sich die dichte Zwischenwandung (17) beinahe bis zum unteren Ende (15) des filternden Elements (10) erstreckt, wodurch eine untere Öffnung (18) in einer derartigen Höhe erzeugt ist, daß der in der Strömung des durch diese Öffnung hindurchgegangenen Gasöls erzeugte Unterdruck die Wirkung hat, das Austreten von Luftblasen auf Höhe des kleinen Lochs (20) zu aktivieren.

5. Filter nach einem der Ansprüche 1 bis 4, dadurch gekennzeichnet, daß das filternde Element (10) und die dichte Zwischenwandung (17; 22) jeweils die Gestalt eines Rotationszylinders aufweisen und daß die dichte Zwischenwandung (17; 22) im Inneren des filternden Elements (10) koaxial angeordnet ist.
